(19) Europäisches Patentamt
European Patent Office
Office européen des brevets

(11) **EP 1 480 231 B1**

(12) **EUROPÄISCHE PATENTSCHRIFT**

(45) Veröffentlichungstag und Bekanntmachung des Hinweises auf die Patenterteilung:
**03.10.2007 Patentblatt 2007/40**

(51) Int Cl.:
***H01B 12/02*** *(2006.01)*

(21) Anmeldenummer: **04291072.9**

(22) Anmeldetag: **23.04.2004**

(54) **Verfahren zur Herstellung eines supraleitenden Kabels**

Manufacturing method of a superconducting cable

Méthode de fabrication d'un câble supraconducteur.

(84) Benannte Vertragsstaaten:
**AT BE BG CH CY CZ DE DK EE ES FI FR GB GR HU IE IT LI LU MC NL PL PT RO SE SI SK TR**

(30) Priorität: **20.05.2003 DE 10322625**

(43) Veröffentlichungstag der Anmeldung:
**24.11.2004 Patentblatt 2004/48**

(73) Patentinhaber: **Nexans**
**75008 Paris (FR)**

(72) Erfinder: **Schippl, Klaus, Dipl.-Ing.**
**30659 Hannover (DE)**

(74) Vertreter: **Döring, Roger**
**Patentanwalt,**
**Weidenkamp 2**
**30855 Langenhagen (DE)**

(56) Entgegenhaltungen:
**DE-A1- 19 724 618          GB-A- 1 576 798**
**US-A- 3 668 297**

**Beschreibung**

Die Erfindung betrifft ein Verfahren zur Herstellung eines supraleitenden Kabels.

Aus der Elektrotechnischen Zeitung ETZ-b, Bd. 26 (1974) S. 215 ff ist ein supraleitendes flexibles Hochleistungs-Gleichspannungskabel bekannt, welches einen bandförmigen Supraleiter aus stabilisierten $Nb_3$ Sn aufweist, welcher von einem sogenannten "Cryogenic envelope" umgeben ist.

Der Leiter ist hohl und wird im Betrieb von flüssigem Helium durchströmt. Zwischen dem "Cryogenic envelope" und dem Leiter befindet sich ein Kanal der ebenfalls von flüssigem oder gasförmigen Helium als Rückleiter durchströmt ist.

Der "Cryogenic envelope" besteht aus mehreren im Abstand voneinander angeordneten gewellten Metallrohren, zwischen denen ein Vakuum und eine sogenannte "Superisolierung" befindlich ist.

Ein solches Kabel kann in kontinuierlicher Arbeitsweise in Längen von bis zu 200 m hergestellt werden. Die maximale Übertragungsleistung eines aus zwei derartigen Einleiterkabeln bestehenden Systems beträgt 5 GW.

Aus der Zeitschrift "Epri Journal" Frühjahr 1999 ist ein Supraleiterkabel bekannt, bei welchem um ein Stützrohr, welches von flüssigem Stickstoff durchströmt ist, eine Vielzahl von Bändern gewickelt sind, welche aus einem sogenannten Supraleitermaterial der 2. Generation bestehen. Diese modernen Supraleiter bestehen aus einen flexiblem Metallband, auf welches ein Ytrium-Barium-Kupferoxid-Compound aufgebracht wurde.

Über den supraleitenden Bändern befindet sich ein gewelltes Metallrohr. Auf das gewellte Metallrohr sind mehrere Lagen einer thermischen Isolierung aufgewickelt. Die thermische Isolierung wird umgeben von einem zweiten gewellten Metallrohr, wobei auf der thermischen Isolierung noch ein Abstandshalter aus Teflon angeordnet ist. Über dem zweiten gewellten Metallrohr befindet sich ein festes Dielektrikum sowie ein äußerer elektrischer Schirm.

Beiden Kabeltypen ist gemeinsam, daß der Supraleiter bzw. auch die ihn umgebenden Kabelelemente sich im Betriebszustand d. h. bei der Temperatur des flüssigen Heliums oder des flüssigen Stickstoffs gegenüber den auf Umgebungstemperatur befindlichen äußeren Kabelelementen verkürzen. Um diese Verkürzung zu verhindern, hat man Armaturen an beiden Enden des Kabels vorgesehen, welche die einzelnen Kabelelemente kraftschlüssig miteinander verbinden und somit eine Verkürzung der inneren Kabelelemente gegenüber den äußeren Kabelelementen vermeiden.

Ausgehend von diesem Stand der Technik besteht die Aufgabe der vorliegenden Erfindung darin, ein Verfahren zur Herstellung eines supraleitenden Kabels anzugeben, bei welchem bereits bei der Herstellung sichergestellt wird, daß eine Kontraktion der Kabelseele infolge einer Temperaturabsenkung gegenüber den auf Umgebungstemperatur befindlichen äußeren Kabelelementen nicht auftritt.

Diese Aufgabe wird durch die im Anspruch 1 erfaßten Merkmale gelöst.

Da die Kabelseele aufgrund ihres Aufbaus eine wesentlich höhere Steifigkeit als das gewellte Rohr hat, legt sich die Kabelseele beim Aufwickeln auf eine Kabeltrommel an die außen gelegene Innenwandung des gewellten Rohres an, d. h. die Kabelseele ist bestrebt; den größtmöglichen Windungsdurchmesser anzunehmen. Da der Innendurchmesser des gewellten Rohres erfindungsgemäß größer ist als der Außendurchmesser der Kabelseele, ist die Länge der im gewellten Rohr befindlichen Kabelseele bezogen auf die jeweilige Mittelachse größer als die Länge des gewellten Rohres. Wird nun die Kabelseele an ihren Enden mit den Enden des gewellten Rohres verbunden, während das Supraleitkabel sich auf der Kabeltrommel befindet, ergibt sich eine Überlänge der Kabelseele im gewellten Rohr. Wird das Supraleiterkabel nun von der Kabeltrommel abgewickelt, dehnt sich das gewellte Rohr um die Länge, welche der Überlänge entspricht oder die Kabelseele legt sich wellenförmig in Abständen an die Innenwand des Wellrohres an. Im Betrieb des Supraleiterkabels, d. h. bei der Temperatur des flüssigen Stickstoffs wird die Dehnung des gewellten Rohres bzw. die Wellenform der Kabelseele aufgehoben.

Die Erfindung ist anhand des in den Figuren schematisch dargestellten Ausführungsbeispiels näher erläutert.

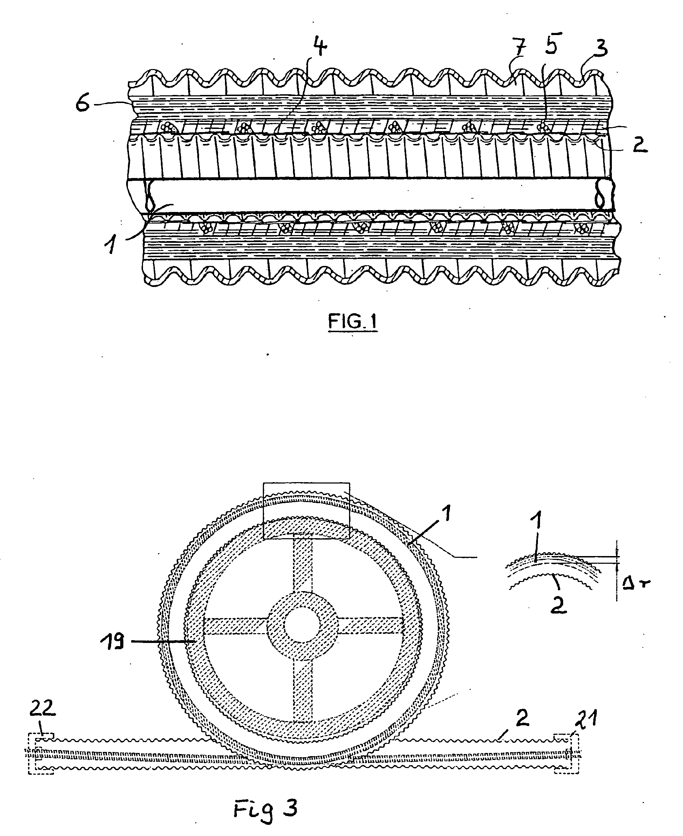

In der Figur 1 ist ein seitlicher Schnitt durch ein Supraleiterkabel dargestellt, welches nach der Lehre der Erfindung hergestellt ist. Das Kabel weist eine Kabelseele 1 auf, welche in nicht näher dargestellter Weise aus einem inneren Stützrohr, einer oder mehrerer Lagen aus Hochtemperatursupraleitermaterial, welche auf das Stützrohr aufgewickelt sind sowie einem auf den Lagen aus Hochtemperatursupraleitermaterial aufgebrachten Dielektrikum besteht. Das Dielektrikum muß kältefest sein und besteht beispielsweise aus Glasseidegewebe, Micabändern oder auch aus Polytetrafluorethylen.

Die Kabelseele 1 befindet sich in einem sogenannten "Cryogenic Envelope", welcher aufgebaut ist aus einem inneren Wellrohr 2 sowie einem äußeren im Abstand zum inneren Wellrohr 2 angeordneten äußeren Wellrohr 3.

Auf das innere Wellrohr 2 ist eine Lage 4 aufgewickelt, welche aus einer beidseitig mit Aluminium bedampften Kunststofffolie besteht. Auf der Lage 4 ist ein Abstandhalter 5 aufgewickelt, welcher vorteilhafterweise aus mehreren zopfartig miteinander verflochtenen Strängen aus Kunststoff, Glasfasern oder einem keramischen Material besteht.

Auf dem Abstandshalter 5 befindet sich eine sogenannte Superisolierungsschicht 6, welche aus wechselweisen Lagen von Metallfolien oder metallbeschichteten Kunststofffolien und Folien aus einem Kunststoffvlies oder aus einem Vlies auf der Basis von Glasfasern oder keramischen Werkstoffen besteht.

Der Aufbau eines "Cryogenic Envelope" ist Gegenstand der EP-0326923 B1.

Vor Betriebnahme des Supraleiterkabels wird der Ringraum 7 zwischen den Wellrohren 2 und 3 evakuiert.

Zur Kühlung des Supraleiterkabels 1 wird flüssiger Stickstoff durch das Stützrohr der Kabelseele sowie durch den Innenraum des Wellrohres 2 geleitet.

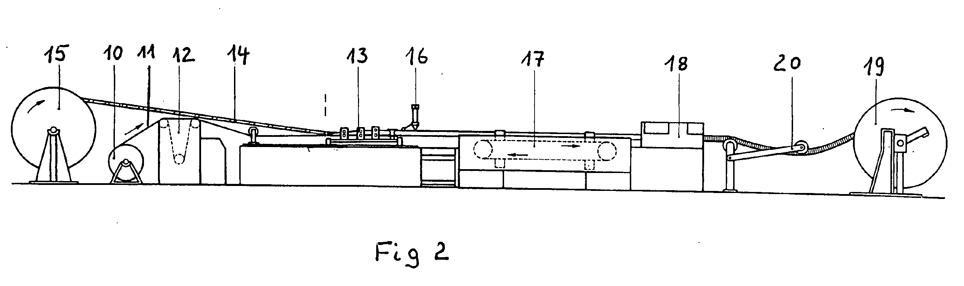

In der Figur 2 ist eine Fertigungsanlage in seitlicher Ansicht dargestellt, mit deren Hilfe das Supraleiterkabel gefertigt werden kann.

Von einer Bandspule 10 wird ein Metallband 11 kontinuierlich abgezogen, ggfs. in einer Bandreinigungsanlage 12 gereinigt und in einer Formvorrichtung 13 allmählich zu einem Schlitzrohr mit Längsnaht geformt.

Die Kabelseele 14 wird ebenfalls kontinuierlich von einer Vorratstrommel 15 abgezogen und in das noch offene Schlitzrohr eingefahren.

Die Längsnaht des Schlitzrohres wird dann in einer Schweißstation 16 verschweißt und das geschweißte Rohr mit der Kabelseele 14 in seinem Innern mittels einer Abzugsvorrichtung 17 einer Wellvorrichtung 18 zugeführt.

In der Wellvorrichtung 18 wird das längsnahtgeschweißte Rohr gewellt und abschließend auf eine Kabeltrommel 19 aufgewickelt. Ein sogenannter Tänzer 20 regelt die Abzugsgeschwindigkeit der Kabeltrommel 19.

Nachdem die gewünschte Fertigungslänge des Supraleiterkabels erreicht ist bzw. wenn die Kabeltrommel 19 voll ist, werden die beiden Enden der Kabelseele 14 mit den Enden des Wellrohres 2 kraftschlüssig verbunden.

Da die Kabelseele 14 wesentlich steifer ist als das Wellrohr, legt sich die Kabelseele 14 an das Wellrohr an und zwar an den größeren Radius des aufgewickelten Wellrohres. Die in dem Wellrohr befindliche Kabelseele 14 weist somit eine größere Länge auf als das Wellrohr.

In einem nachfolgenden Arbeitsgang werden in einer gleichartigen Fertigungsanlage auf das Wellrohr die in Figur 1 gezeigten Elemente - Metallfolie 4, Abstandshalter 5, Superisolierung 6 sowie das äußere Wellrohr 3 - aufgebracht.

In der Figur 3 ist ein Schnitt durch den Kern der Kabeltrommel 19 dargestellt, auf welchen das gewellte Metallrohr (innere Wellrohr 2 nach Figur 1) mit der in dem Wellrohr 2 befindlichen Kabelseele 1 bzw. 14 (nach Fig. 2) aufgewickelt ist. Es ist deutlich zu erkennen, daß die biegesteife Kabelseele 1 an der nach außen weisenden Innenfläche des Wellrohres 2 anliegt und somit mit einer gegenüber dem Wellrohr 2 größeren Länge im Wellrohr 2 vorliegt.

Der Längenunterschied $\Delta$ l (= Überlänge) errechnet sich nach der Formel

$$\Delta l = (R - r) \times \pi \times 2 \times a$$

worin R der Radius der inneren lichten Weite des Wellrohres 2 und r der äußere Radius der Kabelseele des auf der Trommel befindlichen Supraleiterkabels ist und a die Anzahl der auf der Kabeltrommel befindlichen Windungen angibt.

Bei einem Wellrohr mit einem Innendurchmesser von 60 mm, einem Außendurchmesser der Kabelseele von 50 mm und einem Trommelkerndurchmesser von 3000 mm ergibt sich pro Windung eine Überlänge von 3 cm. Die Gesamtlänge einer Rohrwindung beträgt 9,4 m. Die Überlänge ergibt somit zu 0,3 %. Somit läßt sich die beim Abkühlen der Kabelseele auf die Temperatur von flüssigem Stickstoff entstehende Verkürzung der Kabelseele von weniger als 0,3 % leicht ausgleichen.

In der Fig. 3 ist eine Kabellänge dargestellt, welche auf eine Kabeltrommel 19 aufgewickelt ist. Hier ist deutlich zu erkennen, daß sich die Kabelseele 1 aufgrund ihrer Steifigkeit an die nach außen weisende Wandung des Wellrohres 2 anlegt.

Im aufgewickelten Zustand werden Kabelseele 1 und Wellrohr 2 an beiden Enden kraftschlüssig miteinander verbunden, wie bei 21 und 22 schematisch dargestellt.

**Patentansprüche**

1. Verfahren zur Herstellung eines supraleitenden Kabels, bestehend aus einer zumindest ein langgestrecktes supraleitendes Element enthaltenden Kabelseele (1) sowie einem die Kabelseele umhüllenden biegbaren Rohr (2), umfassend die Schritte

   a) kontinuierliches Abziehen der Kabelseele von einem Vorrat (15)
   b) kontinuierliches Abziehen eines Metallbandes (11) von einem Bandvorrat (10),
   c) kontinuierliches Formen des Metallbandes um die Kabelseele herum zu einem Schlitzrohr, Verschweißen des Längsschlitzes und anschließendes Wellen des geschweißten Rohres, wobei der Innendurchmesser des gewellten Rohres größer ist als der Außendurchmesser der Kabelseele,
   d) Aufwickeln des aus Kabelseele und gewelltem Rohr bestehenden supraleitenden Kabels auf eine Kabeltrommel oder Legen des supraleitenden Kabels in zumindest einer Windung und
   e) abschließendes mechanisches Verbinden der Enden der Kabelseele mit den Enden des gewellten Rohres, während das Kabel auf der Kabeltrommel bzw. in zumindest einer Windung vorliegt.

2. Verfahren nach Anspruch 1, **dadurch gekennzeichnet, daß** das Formen des Metallbandes zum Rohr, das Wellen des geschweißten Metallrohres und das Aufwickeln bzw. Legen des Kabels derart erfolgt, daß die Kabelseele mit einer Überlänge $\Delta l$ in dem gewellten Metallrohr vorliegt, die sich errechnet aus $\Delta l = (R - r) \pi 2a$, wobei R der innere Radius des gewellten Rohres, r der äußere Radius der Kabelseele und a die Anzahl der Windungen ist.

**3.** Verfahren nach Anspruch 1 oder 2, **dadurch gekennzeichnet, daß** die Überlänge $\Delta l$ mindestens 0,25 % beträgt.

**4.** Verfahren nach einem der Ansprüche 1 bis 3, **dadurch gekennzeichnet, daß** die Kabelseele einen Hochtemperatursupraleiter enthält.

## Claims

**1.** Process for producing a superconducting cable consisting of a cable core (1), which comprises at least one elongated superconducting element, and of a flexible tube (2) enclosing the cable core, comprising the following steps:

(a) the cable core is drawn continuously from a supply unit (15),
(b) a metal strip (11) is drawn continuously from a strip supply unit (10),
(c) the metal strip is formed continuously around the cable core to form a slotted tube, the longitudinal slot is welded and the welded tube then is corrugated such, that the inner diameter of the corrugated tube is greater than the outer diameter of the cable core,
(d) the superconducting cable consisting of the cable core and the corrugated tube is wound up on a cable drum or the superconducting cable is laid into at least one winding and
(e) finally, the ends of the cable core are joined mechanically to the ends of the corrugated tube, while the cable is arranged on the cable drum or laid into at least one winding.

**2.** Process according to claim 1, **characterized in that** the forming of the metal strip into a tube, the corrugating of the welded metal tube and the winding or laying of the cable are made such, that the cable core is arranged within the corrugated metal tube with an excess length $\Delta l$, which is calculated according to $\Delta l = (R - r) \pi 2a$, wherein R is the inner radius of the corrugated tube, r is the outer radius of the cable core and a is the number of windings.

**3.** Process according to claim 1 or 2, **characterized in that** the excess length $\Delta l$ is at least 0,25 %.

**4.** Process according to one of the claims 1 to 3, **characterized in that** the cable core comprises a high temperature superconductor.

## Revendications

**1.** Procédé de fabrication d'un câble supraconducteur constitué d'une âme de câble (1) qui contient au moins un élément supraconducteur allongé ainsi que d'un tube flexible (2) qui entoure l'âme du câble, lequel procédé comprend les étapes qui consistent à :

a) extraire en continu l'âme du câble d'une réserve (15),
b) extraire en continu un feuillard métallique (11) d'une réserve de feuillard (10),
c) placer en continu le feuillard métallique autour de l'âme du câble pour former un tube fendu, souder la fente longitudinale et ensuite onduler le tube soudé, le diamètre intérieur du tube ondulé étant supérieur au diamètre extérieur de l'âme du câble,
d) enrouler le câble supraconducteur constitué de l'âme du câble et du tube ondulé sur un tambour de câble ou pose du câble supraconducteur en au moins un enroulement et
e) enfin, relier mécaniquement les extrémités de l'âme du câble aux extrémités du tube ondulé, le câble étant placé sur le tambour de câble ou formant au moins un enroulement.

**2.** Procédé selon la revendication 1, **caractérisé en ce que** la transformation du feuillard métallique en tube, l'ondulation du tube métallique soudé et l'enroulement ou la pose du câble s'effectuent de telle sorte que dans le tube métallique ondulé, l'âme du câble présente une surlongueur $\Delta l$ calculée à partir de la formule $\Delta l = (R - r)\pi.2a$, R représentant le rayon intérieur du tube ondulé, r le rayon extérieur de l'âme du câble et a le nombre des enroulements.

**3.** Procédé selon les revendications 1 ou 2, **caractérisé en ce que** la surlongueur $\Delta l$ représente au moins 0,25 %.

**4.** Procédé selon l'une des revendications 1 à 3, **caractérisé en ce que** l'âme du câble contient un supraconducteur à haute température.

FIG.1

Fig 3

Fig 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 0326923 B1

### In der Beschreibung aufgeführte Nicht-Patentliteratur

- *Elektrotechnischen Zeitung ETZ-b,* 1974, vol. 26, 215 ff